# EUROPEAN PATENT SPECIFICATION

(11) **EP 1 115 728 B1**
(45) Date of publication and mention of the grant of the patent: **12.03.2003**
(21) Application number: 99947398.6
(22) Date of filing: 17.09.1999
(51) Int. Cl.: C07F 9/12

(54) **TRIARYL PHOSPHATE ESTER COMPOSITION**
TRIARYL PHOSPHATESTERZUSAMMENSETZUNG
COMPOSITION A BASE D'ESTERS DE TRIARYLPHOSPHATE

(30) Priority: 21.09.1998 US 158425; 16.07.1999 US 354694
(43) Date of publication of application: 18.07.2001
(73) Proprietor: Akzo Nobel N.V., 6824 BM Arnhem (NL)
(72) Inventor: HOMBEK, Richard, Yorktown Heights, NY 10598 (US); MAROLEWSKI, Theodore, A., New City, NY 10956 (US); BUCZEK, Mark, Sleepy Hollow, NY 10591 (US)
(74) Representative: Schalkwijk, Pieter Cornelis
(86) International application number: EP9907006
(87) International publication number: WO00017210

(56) References cited:
- EP-A- 0 573 082
- GB-A- 1 146 173
- GB-A- 1 165 700
- US-A- 3 859 395
- US-A- 4 087 386
- US-A- 4 139 487
- SANDERS H O ET AL: "Toxicity of seven potential polychlorinated biphenyl substitutes to algae and aquatic invertebrates" ENVIRON. TOXICOL. CHEM. (ETOCDK,07307268);1985; VOL.4 (2); PP.149-54, XP000863701 U.S. Fish Wildlife Serv.;Columbia Natl. Fish. Res. Lab.; Columbia; 65201; MO; USA (US)
- CHEMICAL ABSTRACTS, vol. 120, no. 15, 11 April 1994 (1994-04-11) Columbus, Ohio, US; abstract no. 191999, LI T ET AL: "Synthesis of triaryl phosphates as fire-retardant plasticizers" XP002126064 & CN 1 076 451 A (SIPING CITY INST. OF SCIENCE AND TECHNOLOGY;PEOP. REP. CHINA)
- CHEMICAL ABSTRACTS, vol. 090, no. 4, 22 January 1979 (1979-01-22) Columbus, Ohio, US; abstract no. 024119, MOISA Y N ET AL: "Plasticization of poly(vinyl chloride) using triaryl phosphates" XP002126065 & PLAST. MASSY (PLMSAI,05542901);1978; (9); PP.33-4, USSR

## Description

The invention is a novel composition comprising triaryl phosphate derivatives containing a reduced concentration of triphenyl phosphate.

Mixed synthetic triaryl phosphate esters have been prepared by alkylating phenol with alkenes, such as propylene or isobutylene, to obtain a mixture of phenol and substituted phenols. According to US-A-4,093,680, this alkylate mixture can then reacted with phosphorus oxychloride (POCl₃) to form a mixed triaryl phosphate ester. The product mix is a statistical mixture based on the composition of the starting alkylate and always includes some fraction of triphenyl phosphate (TPP), usually from 5 to 50 percent. The product's physical properties are determined by the degree of alkylation of the phenol. A highly alkylated phenol mixture will result in a more viscous phosphate ester product than one less substituted.

For example, this process results in products that are a mixture of phosphate ester isomers including: triphenyl phosphate, diphenyl alkylphenyl phosphate, phenyl di(alkylphenyl)phosphate, and tri(alkylphenyl)phosphate ("mixed alkylated phosphate esters"). It is also possible that phenol rings with 2-5 alkyl groups may be present, however, these groups are slow to react with POCl₃, and are present at less than 0.5% in commercial products. The final product is tailored by selecting a specific blend of phenol and alkyl phenols as starting materials.

Such phosphate esters are used as fire resistant hydraulic fluids and lubricant basestocks, lubricant anti-wear additives, and flame retardant plasticizers. A phosphate ester that is highly resistant to oxidative, thermal, and hydrolytic degradation is desirable. In addition, a phosphate ester that has low volatility will not exhibit large evaporation losses, which is advantageous for high temperature applications.

Prior phosphate esters with good oxidative stability had poor hydrolytic stability, and conversely, phosphate esters with good hydrolytic stability had reduced oxidative stability. It is desirable to produce a triaryl phosphate ester with a combination of excellent thermal, oxidative, and hydrolytic stability.

Alkylated (iso-propyl, tert-butyl, iso-octyl, iso-nonyl) triaryl phosphate esters are useful as fire resistant hydraulic fluids, lubricants and lubricity additives. Currently used products are prepared by reaction of phosphorus oxychloride with mixture of alkylated phenols which contain significant amount of phenol. As a consequence, the resulted product contains triphenyl phosphate at concentrations well above 5%. Triphenyl phosphate is known as mild cholinesterase inhibitor and as such should be avoided in lubricants. The prior art compositions of alkylated triphenyl phosphates with low concentration of triphenyl phosphate are of high viscosity and are not useful as hydraulic fluids.

A recent example of a disclosure that is also relevant to the present invention is contained in US-A-5,206,404. The products that are described in this patent that have a lower content of triphenyl phosphate were obtained by removal of triphenyl phosphate from the standard product by distillation. The resulted product is usually of high viscosity (over 85 cSt at 40°C), and the composition contains a high concentration of multi-substituted molecules and a relatively low concentration of mono-alkylphenyl diphenyl phosphate and, as such, is not very useful in hydraulic fluid applications.

An older example of a disclosure that is also relevant to the present invention is contained in US-A-2,275,041. The products that are described in this patent have a low triphenyl phosphate content and a high mono-alkylphenyl diphenyl phosphate content. However, the products described in US-A-2,275,041 are too reactive to be suitable for use as hydraulic fluids where thermal stability and non-reactivity are primary performance criteria. In fact, the patentees claim their products "are useful as modifying agents for various synthetic resins, and, because of the reactivity of the allyl-type group, are particularly useful as intermediates in the preparation of a wide variety of new organic chemicals."

The invention is a novel liquid composition comprising tert-butylated triphenyl phosphate esters with a low content of triphenyl phosphate and having a viscosity of less than 85, preferably from 30 to 85 cSt at 40°C. This composition shows lower air entrainment time when compared to conventional (standard) products of this type. Preferably, this composition has an air entrainment time of less than 180, more preferably less than 100 and most preferably less than 50 seconds when analyzed according to ASTM D3427. The conventional mixed synthetic triaryl phosphate esters are prepared by phenol alkylation with alkenes to obtain mixture of phenol and alkylated phenols which is then reacted with phosphorus oxychloride. Such product contains high level of triphenyl phosphate usually much more than 5% and typical air entrainment times are in the range of 3 to 6 minutes.

The present invention overcomes the problems of the prior art by providing a fluid composition of mixed alkylated triphenyl phosphate esters comprising by weight:

| | | |
|---|---|---|
| Mono-tert-butylphenyl diphenyl phosphate: | 65 - | 100% |
| Di-tert-butylphenyl phenyl phosphate: | 0 - | 30% |
| Tri-tert-butylphenyl phosphate: | 0 - | 3% |
| Triphenyl phosphate: | 0 - | 5% |

Preferably, the mono-tert-butylphenyl diphenyl phosphate is present in an amount of 65-99.9% by weight, more preferably 65-99% by weight, most preferably 65-95% by weight.

In another preferred embodiment of the present invention the compositions of mixed tertiary-butylated triphenyl phosphate esters contain 80-100% by weight mono-tert-butylphenyl phosphate, which phosphate contains from 40% to 60% ortho isomer, and from 60% to 40% para isomer, 0-20% by weight di-tert-butylphenyl phenyl phosphate, 0-2% by weight tri-tert-butylphenyl phosphate, and 0-5% by weight triphenyl phosphate.

The composition of the present invention was suitably prepared by the following process: POCl₃ is first reacted with a high purity tert-butylated phenol in a quantity sufficient to exhaust at least one functionality of the POCl₃ reagent and the product is then reacted with phenol to complete the reaction. The same product can also be synthesized by reversing this reaction sequence. First, a mixture of diphenyl monochlorophosphate and phenyl dichlorophosphate is prepared in the reaction of POCl₃ with phenol and the reaction is completed using a high purity tert-butylated phenol reagent. To accelerate these reactions, a number of catalysts can be used, such as MgCl₂, TiCl₄, and others.

The fluids prepared according to the previously described method show unusually low air entrainment values of less than 180 seconds, and as low as 20 seconds, and have a content of triphenyl phosphate that typically varies from 0 to 5.0% by weight.

The importance of low air entrainment (rapid air release) for a phosphate ester hydraulic fluid is illustrated by the three minute (180 second) limit established by Siemens AG in their specification TLV 9012 02 for "Fire Resistant Fluid for Electrohydraulic Actuators". Currently, only trixylyl phosphate esters are approved for use in Siemens systems. Trixylyl phosphate esters typically have air entrainment times of thirty seconds or less. Mixed alkylated triaryl phosphate esters are not used in Siemens electrohydraulic control systems because of their typical air entrainment times of three to six minutes. The phosphate ester compositions described in the present invention are within the Siemens AG specification of three minutes and, in several cases, match the very low values of trixylyl phosphate esters.

Additionally, the fluids that are prepared according to the present invention are believed not to be cholinesterase inhibitors in contrast to current commercially available triaryl phosphate esters that have utility as hydraulic fluids.

The present invention is illustrated by the Examples that follow.

### Example 1

Industrial grade (96 wt%) diphenylchlorophosphate was purified by distillation to a purity of 99 wt%. Then, 684 g of the purified diphenylchlorophosphate was reacted with p-tert-butytphenol (99.5%) at a temperature ranging from 120 °C to 170°C for five hours. The reaction was run in the presence of 1.4 g of MgCl₂. The catalyst was removed by washing with water, and unreacted p-tert-butylphenol was removed under vacuum by heating the product to 100°C Yield: 96%.

Product composition:
97.6 wt% of p-tert-butylphenyl diphenyl phosphate
0.6 wt% of di-p-tert-butylphenyl phenyl phosphate
1.8 wt% of tri-p-tert-butylphenyl phosphate

Product properties:
Viscosity at 40°C: 36.9 cSt
Foam*: 0 ml/0 seconds
Air entrainment**: 20 seconds

* determined using ASTM D892.
** determined using ASTM D3427.

It is noted that cSt is the unit that conventionally is used for the kinematic viscosity of lubricants (1 cSt being equal to 0.01 cm²/s).

### Example 2

In this Example, 549 g of industrial grade POCl₃ was reacted with 561 g of 99% pure o-tert-butylphenol for eighteen hours under reflux at the temperature ranging from 100°C to 180°C. The reaction product was cooled to 100°C, and 673.2 g of phenol was added and was reacted at 120 °C - 150°C for six hours. The reaction was run in the presence of 1.1 g of MgCl₂ as a catalyst. The catalyst was removed by washing with water and unreacted o-tert-butylphenol was removed under vacuum by heating the product to 100°C. Yield: 94%.

Product composition:
86 wt% o-tert-butylphenyl diphenyl phosphate
9.5 wt% di-o-tert-butylphenyl phenyl phosphate
0.1 wt% tri-o-tert-butylphenyl phosphate
4.4 wt% triphenyl phosphate

Product properties:
Viscosity at 40°C: 55.5 cSt
Foam: 0 ml/0 seconds
Air entrainment: 40 seconds

### Example 3

In this Example, 500 g of diphenyl chlorophosphate (99% pure) and 50 g of phenyl dichlorophosphate (95% pure) were reacted with p-tert-butylphenol at 145°C for twelve hours in the presence of 1 g of MgCl₂ as a catalyst. The catalyst was removed by washing with water and unreacted p-tert-butylphenol was removed under vacuum by heating the product to 100°C. Yield: 95%.

Product composition:
85.6 wt% p-tert-butylphenyl diphenyl phosphate
13.7 wt% di-p-tert-butylphenyl phenyl phosphate
0.7 wt% triphenyl phosphate

Product properties:
Viscosity at 40°C: 43.8 cSt
Foam: 0 ml/0 seconds
Air entrainment: 90 seconds

### Example 4

In this Example, 306.6 g of reagent grade POCl₃ was reacted with 324 g of 99% pure p-tert-butylphenol for fourteen hours under reflux at the temperature ranging from 100 °C to 150°C. The reaction product was cooled to 100°C and 361 g of phenol was added and was reacted at 145°C for six hours. The reaction was run in the presence of 0.6 g of MgCl₂ as a catalyst. The catalyst was removed by washing with water and unreacted p-tert-butylphenol was removed under vacuum by heating the product to 100°C. Yield: 92%.

Product composition:
76.8 wt% p-tert-butylphenyl diphenyl phosphate
19.6 wt% di-p-tert-butylphenyl phenyl phosphate
0.4 wt% tri-p-tert-butylphenyl phosphate
3.2 wt% triphenyl phosphate

Product properties:
Viscosity at 40°C: 44.2 cSt
Foam: 0 ml/0 seconds
Air entrainment: 120 seconds.

### Example 5

The product from Example 1 and the product from Example 2 were mixed in a ratio of 1:1 to create a composition with air entrainment and viscosity properties meeting the Siemens AG specifications for fire resistant fluid for electrohydraulic actuators. The composition of this blended product was:
48.8 wt% of p-tert-butylphenyl diphenyl phosphate
0.3 wt% of di-p-tert-butylphenyl phenyl phosphate
0.8 wt% of tri-p-tert-butylphenyl phosphate
43.0 wt% o-tert-butylphenyl diphenyl phosphate
4.8 wt% di-o-tert-butylphenyl phenyl phosphate
2.3 wt% triphenylphosphate

Product properties:
Viscosity at 40°C: 46.8 cSt
Foam: 0 ml/0 seconds
Air entrainment 20 seconds

## Claims

1. A composition of mixed alkylated triphenyl phosphate esters comprising:
65-100% by weight mono-tert-butylphenyl diphenyl phosphate,
0-30% by weight di-tert-butylphenyl phenyl phosphate,
0-3% by weight tri-tert-butylphenyl phosphate, and
0-5% by weight triphenyl phosphate.

2. A composition according to claim 1 comprising:
80-100% by weight mono-tert-butylphenyl diphenyl phosphate, which phosphate comprises from 40-60% ortho isomer, and 60-40% para isomer,
0-20% by weight di-tert-butylphenyl phenyl phosphate,
0-2% by weight tri-tert-butylphenyl phosphate, and
0-5% by weight triphenyl phosphate.

3. A composition according to claim 1 or 2 with a viscosity of less than 85 cSt at 40°C.

4. A composition according to any one of claims 1-3 with an air entrainment time of less than 180 seconds when analyzed according to ASTM D3427.

## Patentansprüche

1. Zusammensetzung von gemischten alkylierten Triphenylphosphorsäureestern, umfassend:
65 bis 100 Gew.-% Mono-tert-butylphenyldiphenylphosphat;
0 bis 30 Gew.-% Di-tert-butylphenylphenylphosphat;
0 bis 3 Gew.-% Tri-tert-butylphenylphosphat; und
0 bis 5 Gew.-% Triphenylphosphat.

2. Zusammensetzung gemäß Anspruch 1, umfassend:
80 bis 100 Gew.-% Mono-tert-butylphenyldiphenylphosphat, wobei das Phosphat 40 bis 60% ortho-Isomer und 60 bis 40% para-Isomer umfasst;
0 bis 20 Gew.-% Di-tert-butylphenylphenylphosphat;
0 bis 2 Gew.-% Tri-tert-butylphenylphosphat; und
0 bis 5 Gew.-% Triphenylphosphat.

3. Zusammensetzung gemäß Anspruch 1 oder 2 mit einer Viskosität von weniger als 85 cSt bei 40 °C.

4. Zusammensetzung gemäß einem der Ansprüche 1 bis 3 mit einer Luftmitschleppzeit von weniger als 180 Sekunden, wenn sie gemäß ASTM D3427 analysiert wird.

## Revendications

1. Composition d'esters de triphényl phosphate alkylés mixtes comprenant :
65 à 100 % en poids de mono-tert-butylphényl diphényl phosphate,
0 à 30 % en poids de di-tert-butylphényl phényl phosphate,
0 à 3 % en poids de tri-tert-butylphényl phosphate, et
0 à 5 % en poids de triphényl phosphate.

2. Composition selon la revendication 1, comprenant :
80 à 100 % en poids de mono-tert-butylphényl diphényl phosphate, lequel phosphate comprend de 40 à 60 % d' isomère ortho, et de 60 à 40 % d' isomère para,
0 à 20 % en poids de di-tert-butylphényl phényl phosphate,
0 à 2 % en poids de tri-tert-butylphényl phosphate, et
0 à 5 % en poids de triphényl phosphate.

3. Composition selon l'une quelconque des revendications 1 ou 2 avec une viscosité inférieure à 85 cSt à 40°C.

4. Composition selon l'un quelconque des revendications 1 à 3 avec un temps d'entraînement d'air inférieur à 180 secondes quand il est analysé selon l'ASTM D3427.
